# EUROPEAN PATENT SPECIFICATION

(11) **EP 2 458 427 B1**
(45) Date of publication and mention of the grant of the patent: **02.09.2015**
(21) Application number: 12155431.5
(22) Date of filing: 16.01.2008
(51) Int. Cl.: G02C 7/04, B29C 33/40, B29D 11/00, B29L 11/00

(54) **Contact lens and method of producing contact lens**
Kontaktlinse und Verfahren zur Kontaktlinsenherstellung
Lentille de contact et procédé de production de lentille de contact

(30) Priority: 16.01.2007 JP 2007006666
(43) Date of publication of application: 30.05.2012
(62) Divisional of application: 08702769.4
(73) Proprietor: Menicon Co., Ltd., Nagoya-shi Aichi 460-0006 (JP)
(72) Inventor: Suzuki, Hiroaki, Aichi 487-0032 (JP); Kobayashi, Atsushi, Aichi 487-0032 (JP)
(74) Representative: Forsythe, Dominic

(56) References cited:
- EP-A1- 0 947 872
- EP-A1- 0 985 510
- EP-A2- 0 353 748
- WO-A2-2007/002487
- US-A- 4 055 378
- US-A- 5 009 497
- US-A1- 2004 135 293
- US-A1- 2005 162 747
- US-A1- 2005 270 474

## Description

### TECHNICAL FIELD

The present invention relates to a contact lens of soft type, hard type, or a type that combines elements of these; and relates in particular to a contact lens of novel structure affording superior wear feeling, and to a method of producing such a contact lens.

### BACKGROUND ART

In the field of contact lenses of soft type, hard type, and types that combine elements of these (hereinafter referred to generally as "contact lenses"), it is well known that excellent water retentivity on lens surfaces will have the effect of enhancing wetted feel and improving wear feeling. Specifically, the presence of lacrimal fluid on the anterior surface of a contact lens will have the effect of reducing the foreign body sensation by providing smoother contact with the eyelid during blinking, as well as affording uniform wetting of the lens surface, which aids in viewing objects more clearly as well. The presence of lacrimal fluid on the lens posterior surface also has the effect of reducing the foreign body sensation by ameliorating mechanical irritation of the keratoconjunctiva, as well as functioning as a lubricant during movement of the lens in association with blinking or movement of the eyeball, thus contributing to improved centering and stability of the lens. In this way, improved water retentivity by lens surfaces is an important consideration with respect to improving wear feeling of contact lenses.

For example, with the aim of improving water retentivity of lenses, Patent Citation 1 (Japanese Patent No. 2846343) teaches a contact lens whose lens surface has been subjected to plasma treatment to create hydrophilic groups and endow it with improved hydrophilicity.

However, an inherent problem with the contact lens disclosed in Patent Citation 1 is that the hydrophilic groups present on the lens surface tend to rotate within the molecule and to become hidden inside the resin of the lens, so that hydrophilicity is lost within a relatively short time, thus making it difficult for satisfactory water retentivity to be maintained for an extended period. Moreover, it requires subjecting each contact lens to plasma treatment, resulting in the problem of diminished productivity.

Accordingly, in Patent Citation 2 (Japanese Patent No. 2934965) and Patent Citation 3 (Japanese Unexamined Patent Publication 4-316013) for example there are disclosed contact lenses that, after having undergone plasma treatment of the contact lens surface analogously to Patent Citation 1, are then further subjected to immersion of the lens in a hydrophilic monomer solution and to polymerization of the hydrophilic monomer on the lens surface. This process can afford an improvement in water retentivity, as compared with the contact lens taught in Patent Citation 1.

However, a problem with these contact lenses is that the hydrophilic coating present on the surface tends to peel off with repeated rubbing during cleaning, resulting in a drop in water retentivity. Also, during production of the contact lenses, in addition to plasma treatment carried out analogously to Patent Citation 1 there is further required a step to immerse the lens in the hydrophilic monomer and to polymerize the monomer; and a subsequent step to remove unwanted matter such as unreacted monomer and by-product polymers, creating the problem of further reduction in production efficiency. Nor has the observed improvement in water retentivity been found to be commensurate with the increased number of steps entailed. It is furthermore difficult to adequately control the thickness of the hydrophilic coating which forms on the surface, resulting in localized variations in water retentivity on the lens surface, as well as in variability in water retentivity among lenses, making it difficult to assure a high level of product quality.
Patent Citation 1: JP 2846343 B
Patent Citation 2: JP 2934965 B
Patent Citation 3: JP 4-316013 A

EP 0947872 describes markings on a content lens;
US 4 055 378 describes a rough structure over the whole contact lens;
US 2005/0270474 describes an irridescent iris due to a holographic structure.

### DISCLOSURE OF THE INVENTION

### Problem the Invention Attempts to Solve

With the foregoing in view, it is accordingly one object of the present invention to provide a contact lens of novel structure that can be produced at enhanced production efficiency, and that has enhanced water retentivity on the lens surface so as to realize a superior wear feeling.

It is a further object of the invention to provide a novel production method of a contact lens, whereby such a contact lens can be produced advantageously.

### Means for Solving the Problem

The above objects of this invention are defined in method claim 1 and further dependent claims.

### BRIEF DESCRIPTION OF THE DRAWINGS

FIG 1 is a front view of a contact lens according to a first embodiment of the present invention;
FIG 2 is a sectional view of the contact lens;
FIGS. 3A and 3B are fragmentary enlarged views of the contact lens;
FIGS. 4A and 4B are longitudinal sectional views showing a die for use in production of the contact lens;
FIG 5 is a longitudinal sectional view showing a resin mold for use in production of the contact lens;
FIG 6 is a front view of a contact lens according to a different mode of the present invention;
FIG 7 is a front view of a contact lens according to a different mode of the present invention;
FIG 8 is a front view of a contact lens according to a different mode of the present invention;
FIG 9 is a front view of a contact lens according to a different mode of the present invention;
FIG 10 is a front view of a contact lens according to a different mode of the present invention;
FIG 11 is a front view of a contact lens according to a different mode of the present invention;
FIG 12 is a front view of a contact lens according to a different mode of the present invention;
FIG 13 is a view depicting a production method of a different mode of the present invention;
FIGS. 14A-14F show observed images of die plate and lens plate surface contours according to an embodiment;
FIG 15 is a simplified view of a configuration of an instrument for measuring water retention ability;
FIGS. 16A-16F show captured images of lens plate surfaces taken at time lapse intervals, for several embodiments and comparative examples;
FIG. 17 is a graph of liquid surface area on lens plate surfaces at time lapse intervals, for several embodiments and comparative examples;
FIGS. 18A-18C show photographs depicting advancing contact angle at a lens-molding male die face, for embodiments and for a comparative example;
FIGS. 19A-19C show photographs depicting receding contact angle at a lens-molding male die face, for embodiments and for a comparative example;
FIGS. 20A-20F show photographs depicting advancing and receding contact angle at a lens plate surface for a comparative example;
FIGS. 21A-21F show photographs depicting advancing and receding contact angle at a lens plate surface for an embodiment;
FIGS. 22A and 22B show photographs depicting a receding boundary portion of physiological saline at the surface of contact lenses for an embodiment and for a comparative example; and
FIG. 23 is a graph showing time to onset of depletion of lacrimal fluid film on the lens surface during wear of contact lenses for an embodiment and for a comparative example.

### Key to Symbols

10: contact lens; 12: lens anterior surface: 14: lens posterior surface; 16: anterior surface optical zone; 18: posterior surface optical zone; 22: anterior surface peripheral zone; 24: posterior surface peripheral zone; 26: treated face; 28: treated face; 30: annular groove

### BEST MODE FOR CARRYING OUT THE INVENTION

A fuller understanding of the present invention as defined in method claim 1 will be provided through the following detailed description of the preferred embodiments of the invention with reference to the accompanying drawings.

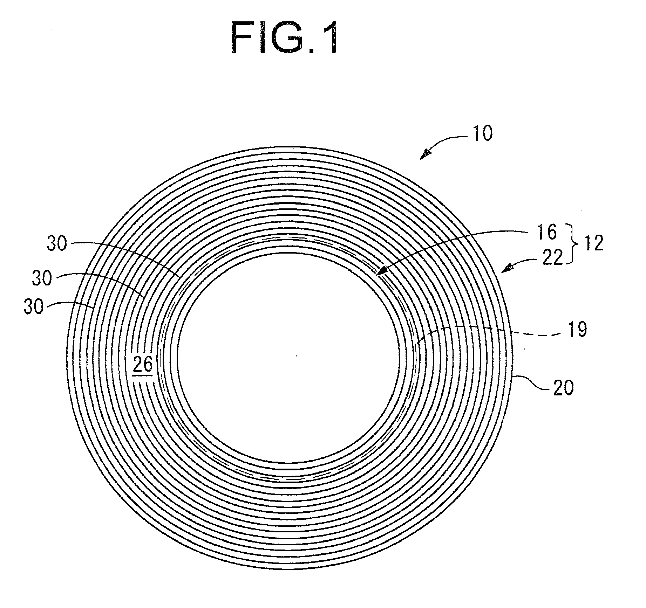

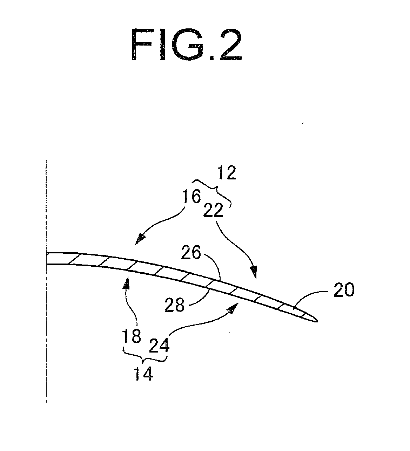

First, FIG 1 depicts a contact lens 10 manufactured according to a first embodiment of the present invention; and FIG 2 depicts in model form a cross section of the contact lens 10. The contact lens 10 has a thin, generally spherical shell shape overall, and is designed to be worn superimposed against the surface of the cornea of the eye. The term "wear" herein refers to use by being placed in the human eye. FIG 1 is a model depiction of the contact lens 10, and depicts annular grooves 30, described later, shown with exaggerated size.

To describe in greater detail, it is possible for the contact lens 10 according to the present embodiment to be implemented in contact lenses of various different types such as soft contact lenses, hard contact lenses, or disposable type contact lenses. The contact lens 10 will employ a resin material etc. composed of any of various polymerizable monomers endowed with optical properties such as light transmissivity, specific examples being hydroxyethyl methacrylate (HEMA), polymethyl methacrylate (PMMA), cellulose acetate butyrate (CAB), silicone copolymers, fluorosilicone acrylate, fluorocarbon polymers, or silicone rubber.

The contact lens 10 has the lens center axis as its optical axis, and is rotationally symmetric in shape about the lens center axis. The lens outside face is defined by a lens anterior surface 12 of convex shape positioned to the opposite side of the lens from the cornea during wear; while the lens inside face is defined by a lens posterior surface 14 of concave shape positioned to the cornea side. Additionally, in the respective center sections of the lens anterior and posterior surfaces 12, 14 there are defined an anterior surface optical zone 16 and a posterior surface optical zone 18 of circular shape.

In order to impart a shape substantially similar to the cornea surface on which it will be worn during wear, the posterior surface optical zone 18 has a center of curvature established on the lens center axis at the back of the lens, and is designed with a base curve face that has a longitudinal cross-sectional profile of concave shape with an appropriate curvature radius. In consideration of factors such as the shape of the cornea and other wear parameters, or of required optical characteristics, the longitudinal cross-sectional profile of the base curve face may employ any of various generally spherical, bowed concave cross sections, for example, one having a constant curvature radius, or one having a curvature radius that varies in the circumferential direction.

Meanwhile, the anterior surface optical zone 16 has a bowed convex profile adapted to impart the objective optical characteristics, such as lens power, in cooperation with the base curve face which has been established as above.

The anterior surface optical zone 16 and the posterior surface optical zone 18 define an optical zone imparted with appropriate optical characteristics, such as lens power, for the purpose of correcting vision. The optical zone is a zone adapted to provide a desired optical effect to the eye of the wearer; the outside peripheral edge part thereof, in other words, the boundary with a peripheral zone (discussed later), can generally be understood to be inflection points of curvature in the respectively longitudinal cross sections of the lens anterior surface and the lens posterior surface. However where for example the lens surface of the optical zone has been designed with a longitudinal cross-sectional profile that gradually varies in the radial direction, or where the boundary is defined by a connecting zone or the like of prescribed width in the radial direction that smoothly connects the optical zone and the peripheral zone between the lens anterior and posterior surfaces, it is not essential for the boundary 19 between the optical zone and the peripheral zone on the lens anterior and posterior surfaces to have linear shape.

The peripheral zone and an edge zone 20 are formed in an outside peripheral section that encircles the optical zone of the contact lens 10. The edge zone 20 has an annular shape at the outermost peripheral edge part of the contact lens 10, and is provided with lens anterior and posterior surfaces of chamfered contours that viewed in lens longitudinal cross section are seen to extend inwardly from an outside peripheral edge face of generally semicircular contours. Additionally, the lens anterior and posterior surfaces of the edge zone 20 connect with anterior and posterior surface peripheral zones 22, 24.

The anterior surface peripheral zone 22 and the posterior surface peripheral zone 24 are each of annular shape having the lens center axis as the center and expending continuously in the circumferential direction with prescribed width dimension in the radial direction; they span between the anterior and posterior surface optical zones 16, 18 and the edge zone 20 of the lens 10, with the inside peripheral edge parts of the anterior and posterior surface peripheral zones 22, 24 connecting with the anterior and posterior surface optical zones 16, 18. That is, in cooperation with the anterior surface peripheral zone 22 and the posterior surface peripheral zone 24, these zones define peripheral zones situated to the outside peripheral side of the optical zones of the lens 10. The lens anterior surface 12 is composed of the anterior surface optical zone 16 and the anterior surface peripheral zone 22, while the lens posterior surface 14 is composed of the posterior surface optical zone 18 and the posterior surface peripheral zone 24.

Additionally, treated faces 26, 28 are respectively formed on the lens anterior surface 12 and the lens posterior surface 14 of the contact lens 10. A periodic structure of minute projections and depressions has been formed in these treated faces 26, 28. Here, no particular limitation is imposed as to the locations where the treated faces 26, 28 are formed. However, as a specific example, in preferred practice they will be situated for example at least φ 5 mm or further from the lens geometric center, in an area that does not overlap the pupil; or at least φ 8 mm or further from the lens geometric center, in the peripheral zone away from the optical zone. In the present embodiment, the treated faces 26, 28 are respectively situated at locations lying entirely of the anterior and posterior surface peripheral zones 22, 24 and some distance from the centers of the anterior and posterior optical zones 16, 18; and have been formed so as to not overlap the pupil during wear of the contact lens 10. The treated face 26 and the treated face 28 are both of comparable structure, and the following discussion will refer to the treated face 26 by way of example.

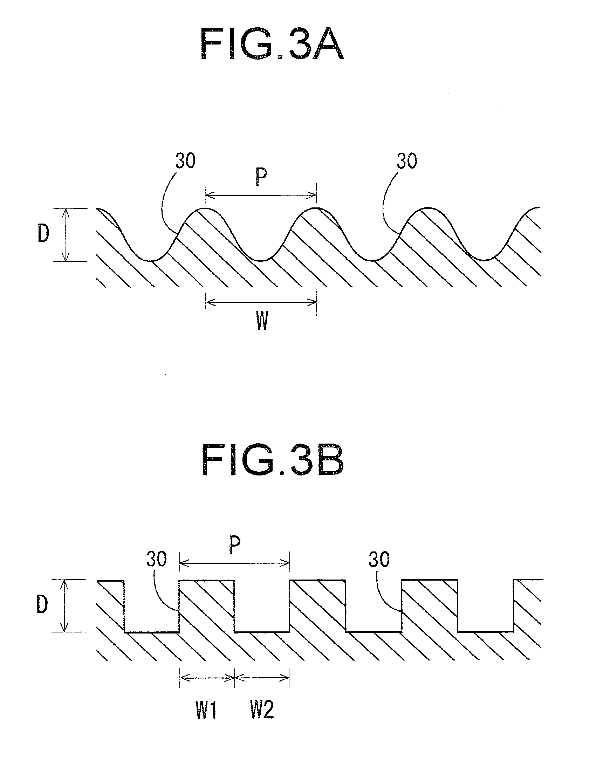

Viewed in front view in the direction of the lens optical axis, a plurality of concentric-circular annular grooves 30 centered on the lens geometric axis are formed at prescribed intervals on the treated face 26 of the present embodiment. A model depiction of the treated face 26 in longitudinal cross section is shown in FIG. 3A. FIG 3A and FIG 3B, discussed later, depict cross sections taken in the direction of the lens diameter, and illustrate in cross section in the periodicity direction the periodic structure that is defined by the plurality of annular grooves 30. As depicted in FIG 3A, the annular grooves 30 take the form of grooves that open onto the lens exterior, and are formed periodically at a prescribed pitch: P in the direction of the lens diameter. Thus, the depressions and projections that are defined by the plurality of annular grooves 30, 30 and their interstices will be concentric-circular in shape and mutually parallel, with these depressions and projections producing on the treated face 26 a periodic structure of minute depressions and projections having periodic depression and projection contours in the direction of lens diameter. Herein, pitch: P refers to the size of a single period in the minute periodic structure formed in periodic fashion as depicted in FIG 3A; where the annular groove 30 cross section is a rectangular cross section as depicted by way of example in FIG 3B, the pitch: P will be equal to the sum of land width: W1 and groove width: W2. Here, while no particular limitation is imposed on the specific size of the annular grooves 30, in preferred practice their depth: D will be established within a range such that 0.01 µm ≤ D ≤ 30 µm. Also, pitch: P will preferably be established within a range such that 0.01 µm ≤ P ≤ 2 µm; and the aspect ratio, expressed as annular groove 30 depth/width (D/W), will preferably be established within a range between 0.1 and 5. This is because if the depth of the annular grooves 30 is too small, they will fail to retain a sufficient amount of water, while if the depth of the annular grooves 30 is too great, lens thickness will be smaller with possible adverse effects on stability of lens shape. In this case, because the annular grooves 30, 30 are extremely minute in size, they will not give rise to tactile or visual effects during wear. As will be appreciated from FIG 3A, in the present embodiment in particular, viewed in the direction of the lens diameter the cross sectional profile of the periodic structure of minute depressions and projections that is formed by the depressed contours of the annular grooves 30, 30 and the projecting contours therebetween will have curving contours of sine wave shape. Consequently, in the present embodiment in particular, the width: W of the annular grooves 30 will be substantially equal in dimension to the pitch: P of the annular grooves 30, 30, whereby in the periodic structure of minute depressions and projections in the present embodiment the depressions and projections will be substantially equal in width.

In the contact lens 10 having the above structure, lacrimal fluid will fill the annular grooves 30 that have been formed in the treated faces 26, 28, with the lacrimal fluid being retained on the lens surface through forces such as surface tension with these annular grooves 30. It is possible thereby to enhance water retentivity on the lens surface, to enhance wear feel by enhancing wetted feel, ameliorate mechanical irritation of the eyelid and keratoconjunctiva, provide smooth movement of the lens, and so on. Moreover, as such water retaining action is realized not through a chemical reaction but rather by the periodic depression/projection contours formed on the treated faces 26, 28, the problem of degradation over time is negligible, and consistent levels of water retention ability are observed over an extended period. Additionally, the periodic structure of minute projections and depressions formed on the treated faces 26, 28 will give rise to iridescent color through dispersion of light, making the contact lens 10 easy to find if accidentally dropped. Moreover, such dispersion is negligible during wear, so visual effects will not arise.

Next, a specific example of an advantageous production method of contact lenses 10 of structure such as the above will be described.

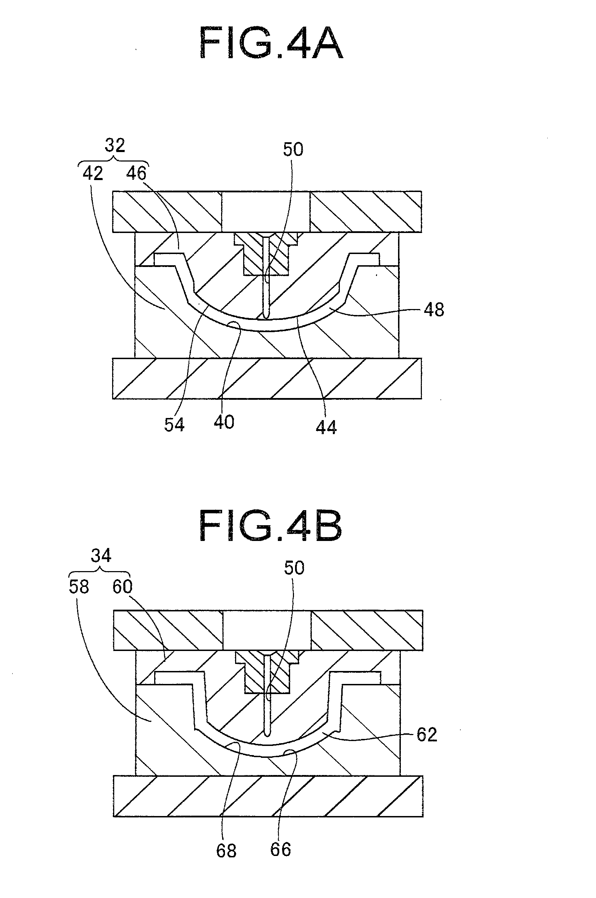

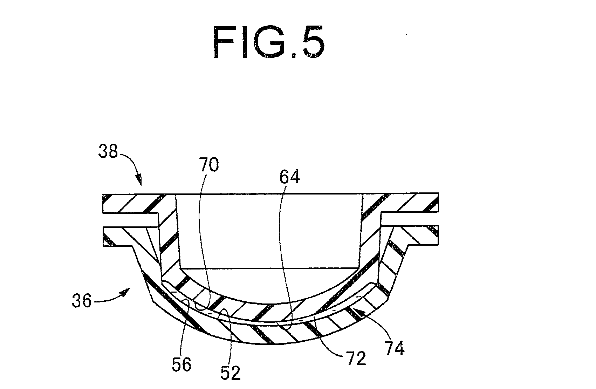

First, as depicted in FIGS. 4A and 4B, a female mold molding die 32 and a male mold molding die 34 are prepared as the dies. These male and a female mold molding dies are used independently to respectively produce through known art resin molding methods a lens molding female mold 36 and a lens molding male mold 38 (see FIG 5) which are provided as the resin molds for the purpose of obtaining the objective contact lens 10 through molding (polymerization). For the molding dies, it is particularly favorable to employ prehardened steel or the like, which is suited to laser machining described later. However, it would be possible to employ other metal materials. As thermoplastic resin materials used for the lens molding female mold 36 and male mold 38, it would be possible to employ, for example, polypropylene, polyethylene, polyethylene terephthalate, polystyrene, polycarbonate, vinyl chloride, nylon, polyacetal, fluororesins, and so on.

The female mold molding die 32 is composed of a first die 42 furnished in its center section with a resin mold molding face 40 of concave spherical shape, and a second die 46 furnished in its center section with a resin mold molding face 44 of convex spherical shape. In particular, the convex resin mold molding face 44 of the second die 46 has contours that correspond to the generally spherical-convex lens anterior surface 12 of the contact lens 10.

The first and second dies 42, 46 are then shut in the axial direction by a mold locking device (not shown), thereby defining a mold cavity 48 between the mating faces of the two dies 42, 46. This mold cavity 48 is then filled with a thermoplastic resin material that is injected therein through a sprue and runner 50 by an injection molding device (not shown) for example. After the material has cooled and solidified, the two dies 42, 46 are parted to release the molded article made of resin material. The lens molding female mold 36 is obtained thereby. The concave spherical lens molding face 52 of the lens molding female mold 36 has been formed by the convex resin mold molding face 44 of the second die 46 to produce contours corresponding to the lens anterior surface 12 of the contact lens 10.

Here, on the resin mold molding face 44 of the second die 46 in the present embodiment there has been formed a periodic structure transfer face 54 having a periodic structure of minute depressions and projections, and situated at a location that corresponds to the treated face 26 which is to be formed on the lens anterior surface 12 of the contact lens 10. In this instance, no particular limitation is imposed as to the specific method of producing the periodic structure transfer face 54, and it would be acceptable for example to employ a cutting process using a cutting bite or the like; however, in preferred practice a mode that involves machining under non-contact conditions by exposing the resin mold molding face 44 to radiation or laser light, or lithography will be employed. It is especially preferable to employ a mode wherein the resin mold molding face 44 is exposed to laser light, using laser light with very short pulse width such as femtosecond laser light or picosecond laser light, in order to give rise to ablation at the resin mold molding face 44 and produce a periodic structure.

In the present embodiment, for the laser light, a femtosecond laser with wavelength of 800 nm, pulse width of 120 fs, and repetition frequency of 1 kHz is used to expose the resin mold molding face 44 to this laser light. Through this process there will be produced on the resin mold molding face 44 a periodic structure of minute depressions and projections that form parallel to the electrical field oscillation direction of the polarized laser light, thus producing the periodic structure transfer face 54. Specifically, the direction of extension of the depression contours and the projection contours will be aligned with the lens circumferential direction (generally perpendicular to the plane of the page in FIGS. 3A and 3B), with the periodic structure formed by the depression contours and the projection contours being formed in the direction of the lens diameter (the left-right direction in FIGS. 3A and 3B). While the scientific basis why a minute periodic structure will form through exposure to femtosecond laser light, it has been found that interference between incident laser light and surface-scattered light that is produced when the laser light undergoes scattering at the surface of the resin mold molding face 44 gives rise to ablation of an interference zone on the resin mold molding face 44. The surface roughness of the resin mold molding face 44 is increased thereby. Then, during the next laser shot, more intense surface-scattered light will produced and ablation will progress further, with interference arising at a location one wavelength away as well. It is thought that the minute periodic structure is produced through repeated exposure to laser light in this way.

During resin molding of the lens molding female mold 36 using the female mold molding die 32, the periodic structure of the periodic structure transfer face 54 that was formed on the resin mold molding face 44 of the female mold molding die 32 will be transferred to the lens molding face 52 of the lens molding female mold 36. As a result, there will be produced on the lens molding face 52 of the lens molding female mold 36 a periodic structure molding face 56 having a periodic structure of minute depressions and projections, situated in a section that corresponds to the location where the objective treated face 26 is to be formed on the contact lens 10.

Meanwhile, like the female mold molding die 32, the male mold molding die 34 is composed of a first die 58 and a second die 60, with a mold cavity 62 that corresponds to the lens molding male mold 38 being defined between the mating faces of the two dies 58, 60. As with the female mold molding die 32, the mold cavity 62 is then filled with a thermoplastic resin material injected therein through a runner 50, and the material is cooled and solidified to produce the lens molding male mold 38. The convex spherical lens molding face 64 of the lens molding male mold 38 has been formed by the concave resin mold molding face 66 of the first die 58 to produce contours corresponding to the lens posterior surface 14 of the contact lens 10.

Here, in a manner substantially comparable to the female mold molding die 32, there has been formed on the resin mold molding face 66 of the first die 58 of the male mold molding die 34 a periodic structure transfer face 68 having a periodic structure of minute depressions and projections situated at a location that corresponds to the treated face 28 to be formed on the lens posterior surface 14 of the contact lens 10. The periodic structure transfer face 68 is produced using a method comparable to that for the periodic structure transfer face 54 of the female mold molding die 32; in the present embodiment, it will be formed using ablation produced by femtosecond laser light as described above. The periodic structure of the periodic structure transfer face 54 formed on the male mold molding die 34 will thereby become transferred to the lens molding face 64 of the lens molding male mold 38. As a result, on the lens molding face 64 of the lens molding male mold 38 there will be produced a periodic structure molding face 70 having a periodic structure of minute depressions and projections, situated in a portion thereof that corresponds to the location where the objective treated face 28 is to be formed on the contact lens 10.

Next, the objective contact lens 10 will be molded, using the lens molding female mold 36 which has the periodic structure molding face 56 formed thereon in this way, and the lens molding male mold 38 which has the periodic structure molding face 70 formed thereon.

First, with the lens molding female mold 36 supported so that its opening faces vertically upward, a polymerizable monomer 72 serving as the material for the contact lens 10 will be placed into a dish-shaped zone defined by the concave lens molding face 52. For the polymerizable monomer 72 there can be appropriately employed any of various liquid monomer compositions commonly used as materials for soft contact lenses or hard contact lenses. For example, compositions incorporating a single or two more different radical polymerizable compounds, or composed of macromers or prepolymers, could be used. The compounds may be optionally combined with appropriate crosslinking agents, sensitizers, thermal polymerization initiators, photopolymerization initiators, as needed.

Next, as depicted in FIG 5, the lens molding female mold 36 will be juxtaposed against and mated with the lens molding male mold 38 in the axial direction (the vertical in FIG 5) to register the molds, thereby defining a sealed mold cavity 74 filled with the polymerizable monomer 72. Then, the polymerizable monomer 72 will be subjected to a polymerization process while maintaining the molds 36, 38 in the registered state. The polymerization process may be a photopolymerization process, a thermal polymerization process, or the like, selected appropriately according to the polymerizable monomer 72 being used.

Once the polymerizable monomer 72 has been polymerized, the lens molding female mold 36 and the lens molding male mold 38 will be parted and the contact lens 10 consisting of the polymerized molded article will be released from the mold to obtain the objective contact lens 10. Mold release of the contact lens 10 can be accomplished, for example, by squeezing the cylindrical section of the lens molding male mold 38 in the axis-perpendicular direction to induce bending deformation of the lens molding face 64 so that the contact lens 10, which upon parting will adhere to the lens molding face 64 of the lens molding male mold 38, is released from the lens molding face 64; or by release using an appropriate chemical product.

In the contact lens 10 that has been polymerization-molded and released from the mold in the above manner, the lens anterior surface 12 has been shaped by the lens molding face 52 of the lens molding female mold 36, while the lens posterior surface 14 has been shaped by the lens molding face 64 of the lens molding male mold 38. The periodic structure transfer face 54 that was formed on the resin mold molding face 44 of the female mold molding die 32 has been transferred, by way of the periodic structure molding face 56, to the lens molding face 52 of the lens molding female mold 36; and in turn the periodic structure molding face 56 has been transferred to the lens anterior surface 12 of the contact lens 10. At the same time, the periodic structure transfer face 68 that was formed on the resin mold molding face 66 of the male mold molding die 34 has been transferred, by way of the periodic structure molding face 70, to the lens molding face 64 of the lens molding male mold 38; and in turn the periodic structure molding face 70 has been transferred to the lens posterior surface 14 of the contact lens 10. Thus, treated faces 26, 28 having a periodic structure of minute depressions and projections are formed respectively at the intended locations on the anterior and posterior surfaces 12, 14 of the contact lens 10.

According to the present production process, the minute periodic structures that were formed on the dies 32, 34 will be transferred to the contact lens 10 through the agency of the resin molds 36, 38. Therefore, once the dies 32, 34 have been fabricated, the only additional step necessary is to form the periodic structure transfer faces 54, 68 on the dies 32, 34, and subsequent production can take place in the same way as a conventional mold-forming process. Consequently, a contact lens 10 having periodic structures of minute projections and depressions can be produced with enhanced efficiency, with substantially no increase in the number of process steps on the contact lens production line. Moreover, because the periodic structures of minute projections and depressions of the periodic structure transfer faces 54, 68 of the dies 32, 34 are produced through transfer, the minute periodic structures on individual lenses produced using the dies 32, 34 can be imparted with consistent contours, and variability in quality among lenses can be minimized.

Additionally, in the present production process, the periodic structure transfer faces 54, 68 are produced on the dies 32, 34 by a non-contact process involving ablation by a femtosecond laser. Consequently, because the machining face experiences substantially no heating, heat-induced deformation can be minimized, so periodic structures of minute depressions and projections can be produced consistently and with high accuracy.

In the production process described above, a femtosecond laser was employed as the laser light for producing the periodic structure transfer faces 54, 68 on the dies 32, 34. However, a picosecond laser or the like could be favorably employed in a comparable manner. It is further possible to employ not just laser light, but radiation as well; for example, an electron beam or the like may be favorably employed. Using such an electron beam, the machining face can be machined without heating, through proper adjustment of the irradiating energy level.

While a preferred embodiment of the present invention has been described in detail hereinabove, this is merely exemplary, and the embodiments of the present invention should in no way be construed as limited to the specific disclosure herein. In the following description, components and parts that are substantially comparable to those in the preceding embodiment are assigned like symbols to the preceding embodiment, and will not be discussed in any detail.

For example, the specific contours of the periodic structures of minute depressions and projections formed on the contact lens are not limited in any particular way. While a number of other favorable modes of periodic structures are given below as examples, it should be understood that the specific contours of the periodic structures are not limited to the contours described below. In the drawings discussed below, the anterior surface of the contact lens is depicted and the periodic structure is shown exaggerated in size. In the modes described below, it is of course possible for periodic structures to be produced on the lens posterior surface as well.

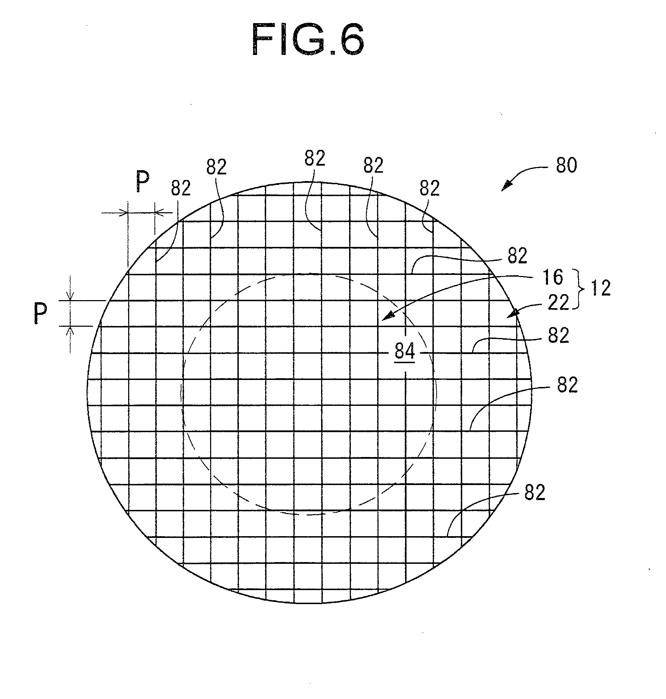

FIG 6 depicts a contact lens 80 having a periodic structure according to a different mode. In this contact lens 80, a plurality of linear grooves 82, 82 that extend in a linear pattern and open onto the lens exterior have been formed in a lattice pattern at prescribed pitch: P as seen in front view in the direction of the lens optical axis, producing a periodic structure. Here, the size of the linear grooves 82 will preferably be generally comparable to the size of the annular grooves 30 in the preceding embodiment, i.e. with depth: D established within a range of between 0.01 µm and 30 µm, pitch: P between 0.01 µm and 2 µm, and aspect ratio, expressed as depth/width (D/W) between 0.1 and 5.

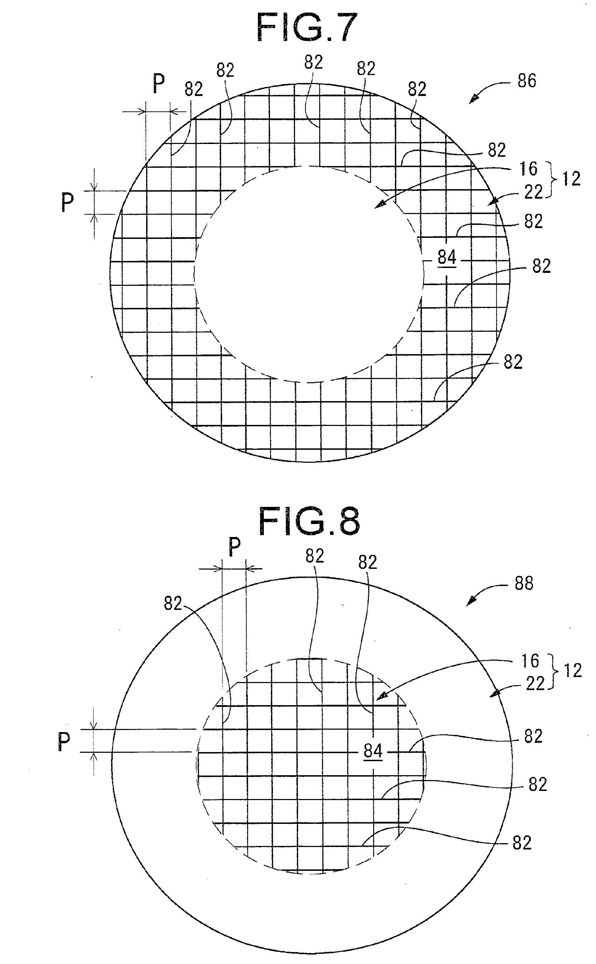

In the contact lens 80 of the present mode in particular, the entire lens surface constitutes a treated face 84 having a periodic structure produced by forming the linear grooves 82 over the entire lens surface. Thus, in the present invention it is not essential for a treated face to be formed away from the center section of the optical zone, but may instead be formed over the entire lens as shown in the present mode. Alternatively, as with the contact lens 86 depicted in FIG 7, the treated face 84 may be formed only in the peripheral zone 22; or as with the contact lens 88 depicted in FIG 8, the treated face 84 may be formed only in the optical zone 16. It is of course possible to form a periodic structure on either the lens anterior surface or the lens posterior surface exclusively. While not depicted individually, designs wherein a periodic structure is formed exclusively on either the lens anterior surface or the lens posterior surface, or wherein a periodic structure is formed exclusively on either the lens anterior surface or the lens posterior surface, may be implemented in a comparable manner for any contact lens of structure according to the present invention, whether it be the contact lens 10 discussed previously or any of the contact lenses discussed hereinbelow. In the contact lenses 80, 86, 88 shown in FIGS. 6 to 8, the linear grooves 82 are formed extending in two directions (the vertical direction and the horizontal direction in FIGS. 6 to 8) and intersect one another, however, it would also be acceptable to form a plurality of linear grooves 82 extending in either one of these directions (e.g. in either the vertical direction or the horizontal direction in FIGS. 6 to 8) exclusively. The angle of intersection of the linear grooves 82 is not limited to a right angle as described above, and may be modified appropriately so as to intersect on the diagonal, for example.

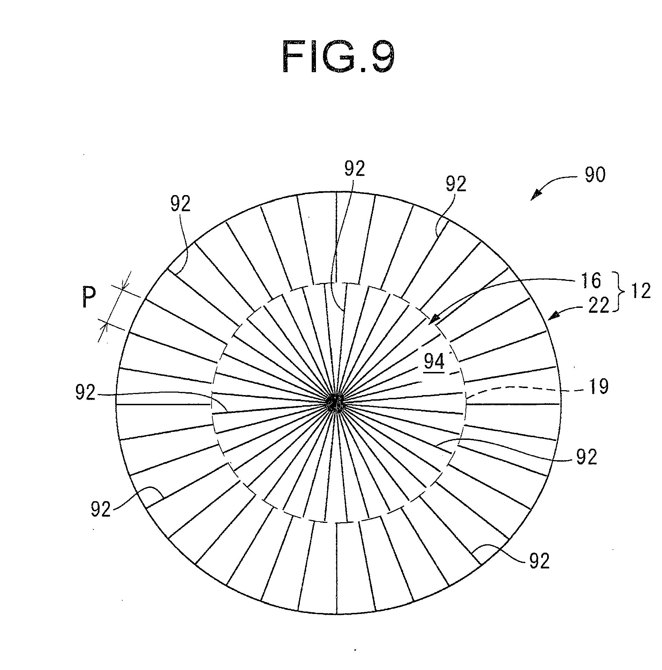

FIG 9 depicts a contact lens 90 having a periodic structure according to yet a different mode. In this contact lens 90, a plurality of linear grooves 92, 92 that extend in a linear pattern in the diametrical direction from the lens geometric center and that open onto the lens exterior have been formed at prescribed angular spacing in the lens circumferential direction. Thus, viewed from the front in the direction of the lens optical axis, the treated face 94 having a periodic structure that extends in a radial pattern from the lens center will be seen to cover the entire lens face. In preferred practice, the depth, width, and aspect ratio of the linear grooves 92 in the present mode will be established within ranges comparable to those for the linear grooves 82 discussed previously.

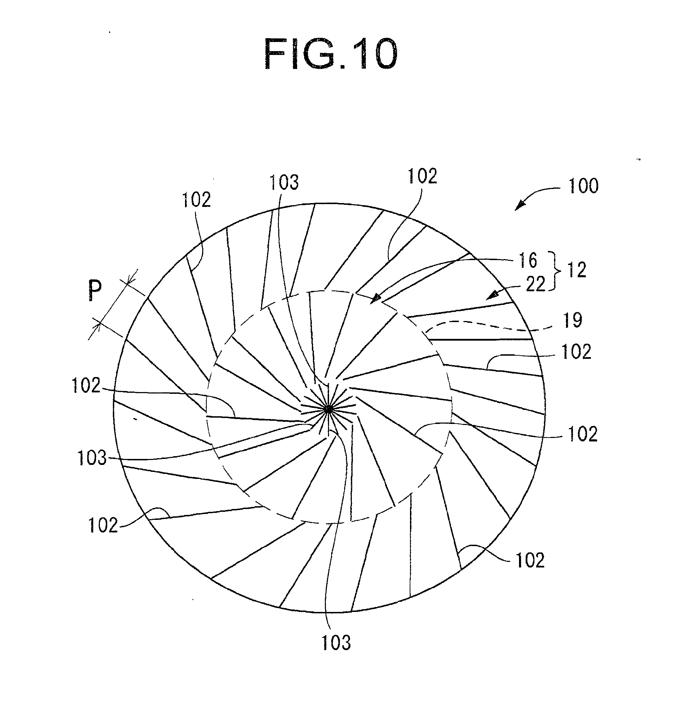

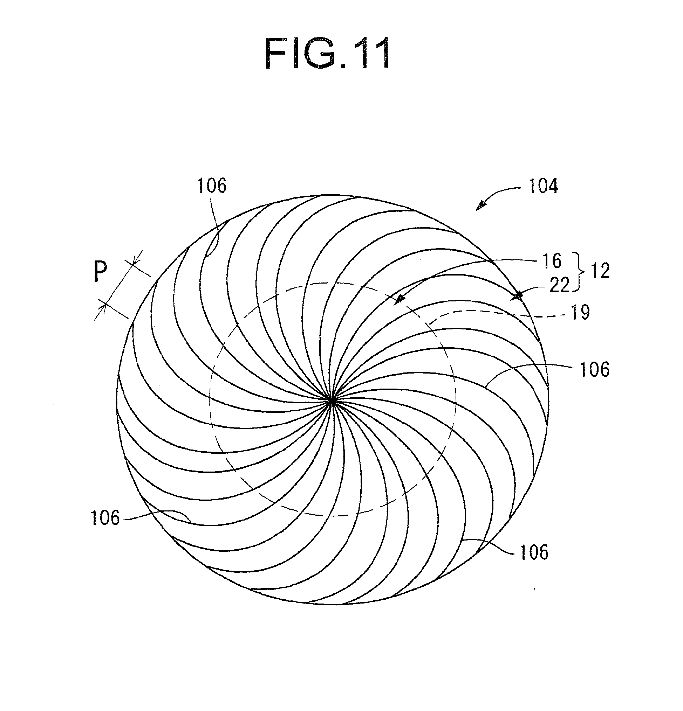

In the present mode in particular, the linear grooves 102 are not continuous in the lens diametrical direction, but are instead discontinuous between the optical zone 16 and the peripheral zone 22. Thus, it is not essential for the radially-extending periodic structure to be continuous in the diametrical direction of the lens. Nor is it essential for the radially-extending periodic structure to be one that extends along the diametrical direction of the lens. For instance, as with the contact lens 100 depicted in FIG. 10, linear grooves 102 that extend in a linear pattern somewhat inclined with respect to the lens diametrical direction may be formed instead; or as with the contact lens 104 depicted in FIG 11, curving grooves 106 that extend from the lens center towards the exterior in curving patterns along the lens circumferential direction may be formed. In these modes as well, the size of the linear grooves 102 and the curving grooves 106 will preferably have size dimensions for pitch: P, depth: D, width W:, aspect ratio, etc. that have been established within ranges comparable to those for the linear grooves 92 discussed earlier. In the contact lenses 100, 104 depicted in FIGS. 10 and 11, because the linear grooves 102 and the curving grooves 106 have been formed in radial patterns, their pitch: P will vary along the lens diametrical direction. Thus, in the present invention, it is not essential that the pitch of the periodic structure of minute depressions and projections be an unchanging pitch. In particular, in the contact lens 100 depicted in FIG. 10, the center section of the optical zone 16 has a plurality of linear grooves 103, 103 extending in a linear pattern along the diametrical direction from the lens center. Thus, it is not essential for the contours of periodic structures in the optical zone and in the peripheral zone to have a single pattern, and periodic structures of different patterns could be combined.

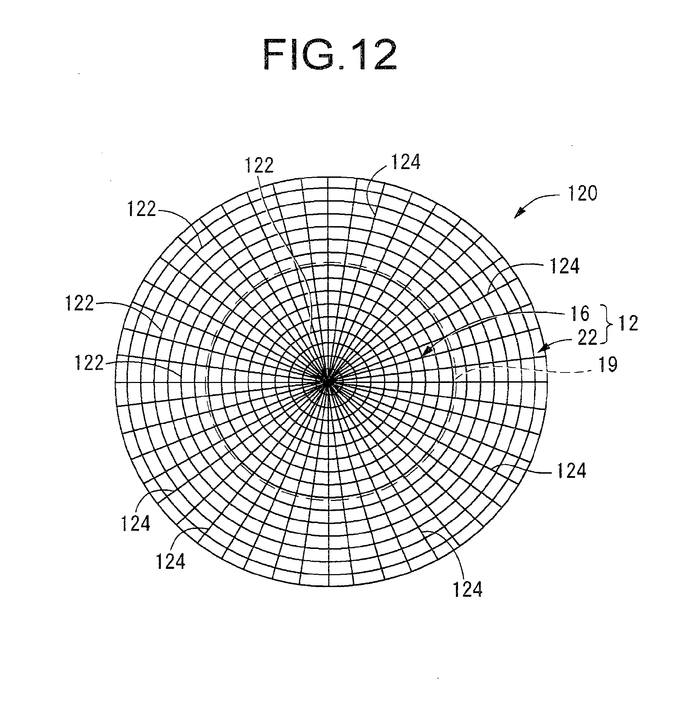

It is of course possible for the various modes described above to be employed in combination. For example, as with the contact lens 120 depicted in FIG. 12, a minute periodic structure that combines a plurality of annular grooves 122, 122 that extend in a concentric circular pattern centered on the lens geometric center, and a plurality of linear grooves 124, 124 that extend in a radial pattern in the diametrical direction from the lens geometric center, may be devised.

Further, as depicted in the contact lenses 100, 104 in FIGS. 10 and 11 above, it is not essential that the periodic structure of minute depressions and projections in the present invention have unchanging pitch: P. Consequently, the pitch: P of the annular grooves 30, 30 in the contact lens 10 described above (see FIGS. 3A and 3B) may change gradually in the lens diametrical direction, for example.

In the contact lens production process described previously, the dies 32, 34 which are used to produce the resin molds 36, 38 are subjected to laser machining to produce minute periodic structures. However, it would be acceptable for example to instead subject the resin molds 36, 38 to laser machining directly, without carrying out laser machining of the dies 32, 34, in order to produce minute periodic structures. Specifically, first, without carrying out laser machining of the female mold molding die 32 described previously, the lens molding female mold 36 will be formed using a female mold molding die 32 that lacks a periodic structure transfer face 54. Then, a desired location (corresponding to that of the treated face 26) on the lens molding face 52 of the lens molding female mold 36 so obtained will be exposed to a femtosecond laser or a picosecond laser for example, to give rise to ablation and produce a periodic structure. With this arrangement, a minute periodic structure comparable to that of the periodic structure molding face 56 discussed previously can be formed on the lens molding face 52. For the lens molding male mold 38, as with the lens molding female mold 36, the lens molding male mold 38 will be produced using a male mold molding die 34 that lacks a periodic structure transfer face 68. Then, a desired location (corresponding to that of the treated face 28) on the lens molding face 64 of the lens molding male mold 38 will be exposed to a femtosecond laser or a picosecond laser to produce a periodic structure. By so doing, a minute periodic structure comparable to that of the periodic structure molding face 70 discussed previously can be formed on the lens molding face 64.

Then, the lens molding female mold 36 having the periodic structure molding face 56 formed thereon, and the lens molding male mold 38 having the periodic structure molding face 70 formed thereon, will be mated analogously to the production process described previously, and the cavity between the lens molding faces 52, 64 will be filled with a polymerizable monomer 72 which will then undergo a polymerization process to obtain the contact lens 10. By so doing, the minute periodic structures of the periodic structure molding faces 56, 70 will be transferred to the lens anterior and posterior surfaces 12, 14 respectively, to form thereon treated faces 26, 28 having periodic structures with minute depressions and projections.

According to this production process, dies of conventional design can be employed as the dies 32, 34. Furthermore, because the periodic structures are formed on the resin molds 36, 38, it is possible to more flexibly adapt to modifications of the contours of the periodic structures.

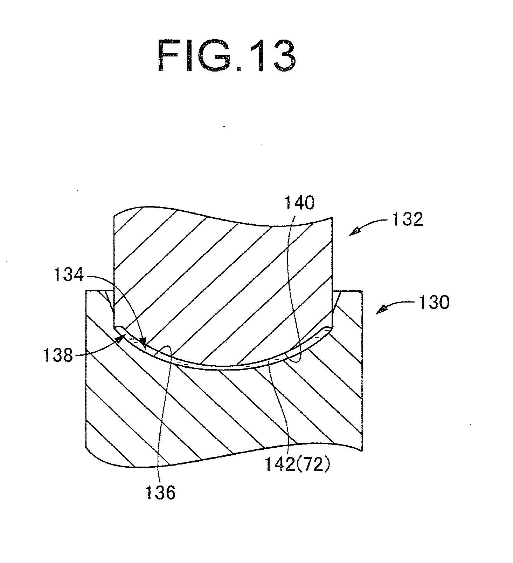

It is additionally possible using dies to directly mold the objective contact lens 10. For example, as depicted in model form in FIG 13, a female die 130 and a male die 132 will be prepared as the dies. In the center section of the female die 130 there will be formed a lens molding face 134 of generally spherical concave contours corresponding to the lens anterior surface 12 of the objective contact lens 10. A periodic structure molding face 136 having a periodic structure of minute depressions and projections will then be formed on the lens molding face 134, at a location corresponding to the treated face 26 to be formed on the lens anterior surface 12 of the contact lens 10. Like the female mold molding die 32 and the male mold molding die 34 discussed previously, the periodic structure molding face 136 can be more advantageously produced, for example, by exposing the lens molding face 134 to femtosecond laser light as described previously to give rise to ablation, than it can by a cutting process or laser machining accompanied by appreciable thermal deformation.

Meanwhile, in the center section of the male die 132 there will be formed a lens molding face 138 of generally spherical convex contours corresponding to the lens posterior surface 14 of the objective contact lens 10. Then, as with the female die 130, on the lens molding face 138, a location corresponding to the treated face 28 to be formed on the lens posterior surface 14 of the contact lens 10 will be exposed to femtosecond laser light to give rise to ablation, thereby producing a periodic structure molding face 140 having a periodic structure of minute depressions and projections.

A polymerizable monomer 72 serving as the material for the contact lens 10 will then be placed in the lens molding face 134 of the female die 130. In the present production process, a monomer composition that incorporates a thermal polymerization initiator may be employed, for example. Next, the dies will be registered by juxtaposing and mating the male die 132 with the female die 130 from vertically above in the axial direction (the vertical direction in FIG 13), thereby defining a sealed mold cavity 142 which is filled with the polymerizable monomer 72. Then, while maintaining the dies 130, 132 in the registered state, the polymerizable monomer 72 will be subjected to a polymerization method of example by heating the dies to bring about thermal polymerization.

Subsequently the dies 130, 132 will be parted to release the polymerized molded article made of resin material, i.e. the contact lens 10, to obtain the objective contact lens 10. In the contact lens 10 molded through polymerization in this way, the lens anterior surface 12 has been formed by the lens molding face 134 of the female die 130, while the lens posterior surface 14 has been formed by the lens molding face 138 of the male die 132. The periodic structure molding face 136 that was formed on the female die 130 will have been transferred to the lens anterior surface 12 of the contact lens 10. The treated face 26 having a periodic structure of minute depressions and projections will thereby be formed at the desired location on the lens anterior surface 12 of the contact lens 10. Additionally, through transfer of the periodic structure molding face 140 that was formed on the male die 132 to the lens posterior surface 14 of the contact lens 10, the treated face 28 having a periodic structure of minute depressions and projections will be formed at the desired location on the lens posterior surface 14.

According to this production process, the periodic structure molding faces 136, 140 that have been formed on the dies 130, 132 are transferred directly to the contact lens 10, so the treated faces 26, 28 having periodic structures of minute depressions and projections can be produced more consistently. Further, since resin molds are not required, a process to mold the resin molds will not be needed, and enhanced production efficiency can be obtained.

Furthermore, periodic structures of minute depressions and projections may be produced inter alia through direct exposure to radiation or laser light of a lens anterior surface or lens posterior surface of a lens molded article that has been produced by a conventionally known production process. With such a production process it will be possible to produce periodic structures of minute depressions and projections irrespective of the process employed to produce the lens molded article. Accordingly, it will be possible to produce periodic structures of minute depressions and projections not just on lens molded articles produced by mold-forming methods, but also on lens molded articles of various kinds produced by other conventionally known methods such as lathe-cutting or spin-casting methods.

While not set forth individually herein, various other modifications, variations, and improvements to the present invention will be apparent to the skilled practitioner of the art. Such embodiments are not to be regarded as a departure from the spirit of the invention, but should be regarded as lying within the scope of the present invention.

### EXAMPLES

A series of tests carried out for the purpose of demonstrating the technological advantages afforded by the contact lens and the contact lens production method in accordance with the present invention are presented below by way of examples.

First, a die plate of material comparable to that of the female mold molding die 32 (second die 46) that is employed in production of the contact lens 10 according the preceding embodiment was prepared. The material of the die plate was STAVAX (TM).

Next, laser light was directed onto the surface of the die plate to produce a minute periodic structure. As the laser light, there was employed a femtosecond laser with wavelength of 800 nm, pulse width of 120 fs, and repetition frequency of 1 kHz. A femtosecond laser machining unit made by Canon Machinery Co. Ltd. was used as the femtosecond laser machining unit.

A resin plate of material comparable to that of the lens molding female mold 36 in the preceding embodiment and corresponding to a resin mold was then prepared. The material for the resin plate was polypropylene. The die plate having the aforementioned minute periodic structure formed thereon was heated to approximately 170°C with a hot plate and pressed against the resin plate to transfer the minute periodic structure on the die plate onto the resin plate.

Next, the resin plate to which the minute periodic structure had been transferred was used to carry out polymerization molding of a soft contact lens material containing silicone, to produce a lens plate corresponding to a contact lens as an example of the invention.

First, the resultant die plate and lens plate underwent arbitrary cross sectional shape analysis and contour measurement by AFM The AFM measurement and evaluation system was a scanning probe microscope: SPI3800N/SPA300 made by Seiko Instruments Inc. Measuring conditions were: a model SI-AF01 cantilever with spring constant of 0.2 N/m and resonance frequency of 14 kHz; and a scanner having a scan range of 100 µm, X/Y sensitivity of 300 nm/V, and Z sensitivity of 27.2 nm/V

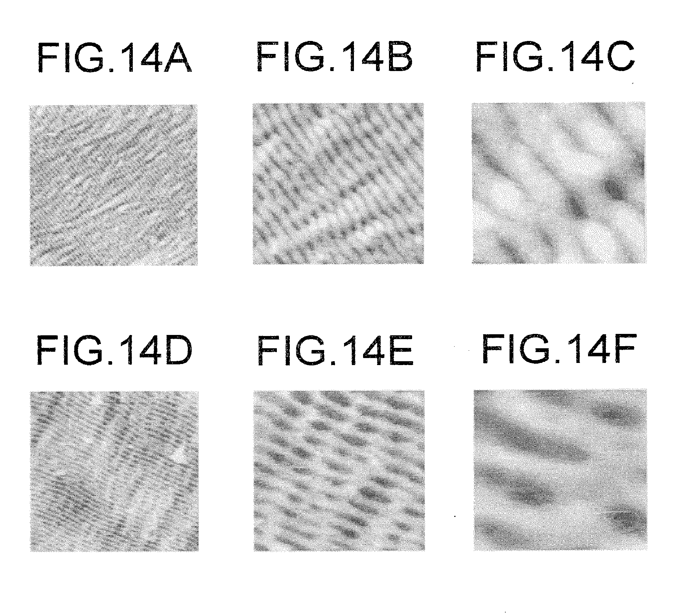

The results of these AFM measurements are given in FIGS. 14A-14F. FIGS. 14A-C depict, in order, scan areas of 30 × 30 µm, 10 × 10 µm, and 3 × 3 µm on the die plate; FIGS. 14D-F depict, in order, scan areas of 30 × 30 µm, 10 × 10 µm, and 3 × 3 µm on the lens plate. From FIGS. 14A-F it will be apparent that the minute periodic structure produced on the die plate has been successfully transferred to the lens plate.

**[Table 1]**

| Specimen | Pitch | Depth |
|---|---|---|
| Die plate | 0.67 | 0.19 |
| Lens plate | 0.91 | 0.16 |

| | | |
|---|---|---|
| unit (µm) | | |

Table 1 gives the results of arbitrary cross sectional shape analysis. For the die plate, it was found that a periodic structure had formed at pitch smaller than 800 nm wavelength. For the lens plate, pitch was greater than for the die plate; this is attributed to larger pitch owing to the fact that the lens plate contains water.

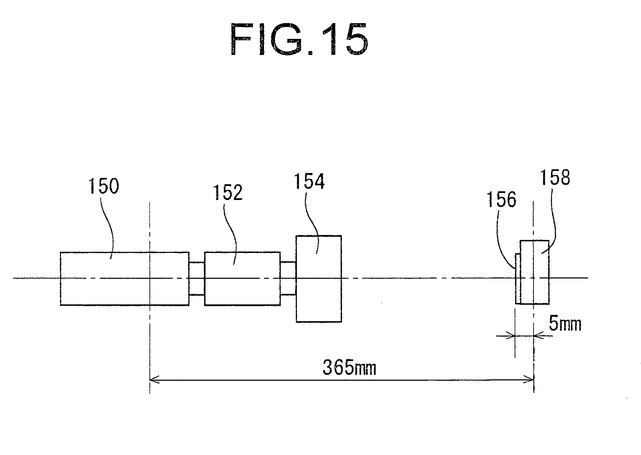

Next, water retention ability was measured for the resultant lens plate, and for a Comparative Example plate lacking a minute periodic structure provided as a Comparative Example. The instrument configuration used to measure water retention ability is depicted in simplified form in FIG 15. Here, a 3 CCD color video camera DXC-390 made by Sony Corp. was used as the CCD camera 150; a Micro NIKKOR 105 mm F 2.8S lens made by Nikon Corp. was used as the camera lens 152; and Nikon macro rings PN-11 and PK-13 mounted in an FC mount were used as macro rings 154. The lens plate 156 of the Example and the Comparative Example plate 160 were immersed in liquid, withdrawn into the air, and after drying for some time the plate surface condition was examined with the CCD camera 150 resting on a black rubber-coated plate 158; also, the surface area of the liquid on the plate surface was measured (in pixel units) on the basis of images taken with the CCD camera 150. The image analysis software was IPPWIN-V4.5J made by Planetron Inc. The distance between the surface of the lens plate 156 or 160 and the medial section of the black rubber-coated plate 158 in the thickness direction was 5 mm; the distance between the medial section of the black rubber-coated plate 158 in the thickness direction and the fastening mount of the CCD camera 150 was 365 mm; the lens aperture of the camera lens 152 was 2.8; and the shooting distance was 0.34 m.

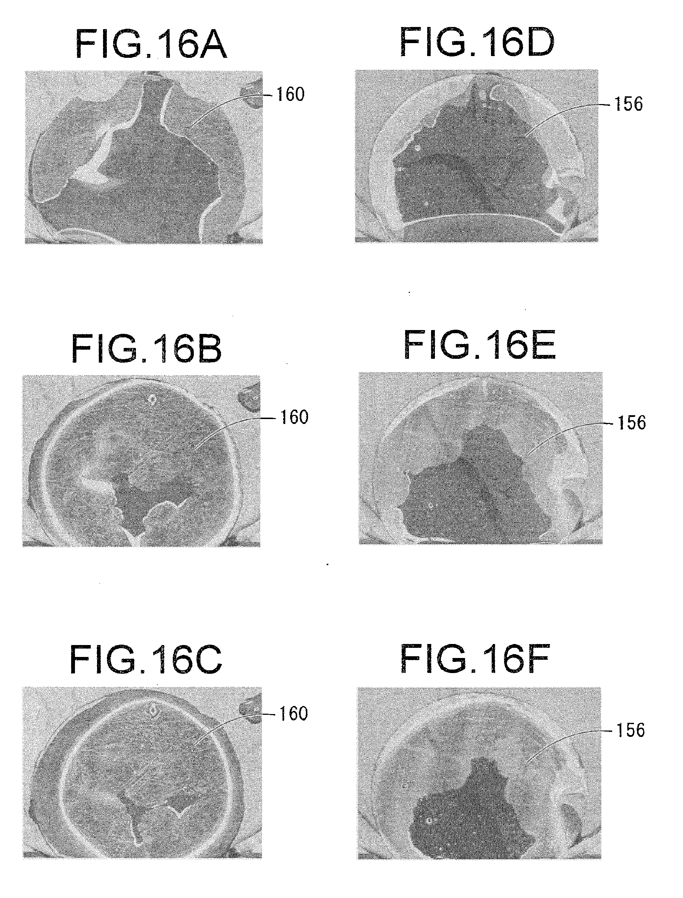

FIGS. 16A-F depict change observed on the surface of the Example lens plate 156 and of the Comparative Example plate 160, after being withdrawn from the liquid into the air. FIGS. 16A-C respectively depict the plate surface condition of the Comparative Example plate 160 (which lacks a minute periodic structure) at the 0 second point, 30 second point, and 60 second point after being withdrawn into the air. FIGS. 16D-F respectively depict the plate surface condition of the Example lens plate 156 (which has a minute periodic structure) at the 0 second point, 30 second point, and 60 second point after being withdrawn into the air. From FIGS. 16A-F it will be appreciated that in the lens plate 156 of structure according to the present invention, the surface area of liquid on the plate surface was greater than on the Comparative Example plate 160, demonstrating superior water retention ability.

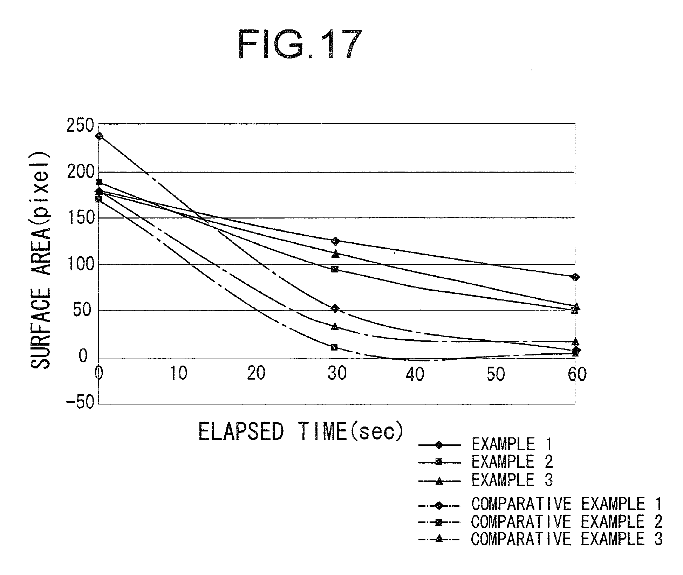

Next, FIG 17 depicts change in surface area of liquid on the plate surface observed on Example lens plates and Comparative Example lens plates. In FIG 17, three lens plates were prepared for the Examples and three for the Comparative Examples. The three lens plates of the Examples and of the Comparative Examples were respectively identical, with multiple (three) tests being carried in order to demonstrate reproducibility. In FIG 17, results for the tests are respectively denoted as Examples 1 to 3 and Comparative Examples 1 to 3. As will be appreciated from FIG 17, in each test carried out on the lens plates of the Comparative Examples, substantially all of the liquid was shed by approximately the 30-second point after being withdrawn to the air; whereas with the lens plates of structure according to the present invention, in each test liquid was observed to be retained on the surface even after one minute had passed. Furthermore, with the Comparative Example lens plates, the decline in water retaining ability was precipitous, with a sharp decline in water retaining ability observed immediately after being withdrawn to the air; whereas with the lens plates of the Examples, the decline in water retaining ability was gradual, demonstrating that the lenses have enhanced water retaining ability in this respect as well.

Based on the results of these Examples, it was demonstrated that the contact lens production process of the present invention can more consistently produce minute periodic structures on contact lenses. It was also demonstrated that contact lenses according to the present invention have enhanced water retaining ability compared to contact lenses of conventional structure.

Different tests carried out for the purpose of further demonstrating the technical advantages of the contact lens and production process according to the present invention will be described below.

First, a female die (first die) was prepared to make the lens molding male mold used for contact lens production according the preceding embodiment. The material of the die was STAVAX (TM).

Next, laser light was directed onto the surface of the die to produce a minute periodic structure. As the laser light there was employed a femtosecond laser with wavelength of 800 nm, pulse width of 180 fs, and repetition frequency of 1 kHz. A femtosecond laser machining unit made by Canon Machinery Co. Ltd. was used as the femtosecond laser machining unit.

During laser machining, the laser light, transformed by a cylindrical lens into a vertically elongated slit of light approximately 6 mm in length, was directed onto the die while rotating the die in the circumferential direction about its lowest point. In the peripheral zone of the forming face of the die, the laser was directed on the diagonal at a (fixed) angle based on R 8.00 mm so as to be perpendicular to the surface. By subsequently carrying out exposure to the laser while rotating the polarization direction of the laser light by 90°, there were produced dies having two types of periodic structures, i.e. a concentric circular pattern and a radial pattern, formed thereon.

Next, mold-forming was carried out using the dies imparted with these two different types of periodic structure, to produce lens molding male molds made of polypropylene.

The two types of lens molding male molds having periodic structures of a concentric circular pattern or radial pattern formed thereon in this way, and lens molding male molds lacking a periodic structure, were subjected to surface analysis using a contact angle meter. The contact angle meter was a DropMaster 500 made by Kyowa Interface Science Co. Ltd.; two different dynamic contact angles, i.e. an advancing contact angle and a receding contact angle, were measured as the contact angles. The method of measuring the advancing and receding contact angles were as follows. First, a droplet of liquid was placed in contact with the mold surface, and the boundary of the droplet was advanced or receded by dilating or aspirating it. During this process, the condition of the droplet was observed from its side face while measuring the angle of contact between the droplet surface and the mold surface at the respective left and right edge points of the droplet. The droplets used in the tests were distilled water.

**[Table 2]**

| | | Comp. Ex. | Examples | |
|---|---|---|---|---|
| Periodic structure pattern | | - | Concentric circle | Radial |
| Time (msec) | | 0 | 400 | 300 |
| Sample 1 | L | 99.5 | 120.3 | 106.9 |
| | R | 100.0 | 126.9 | 106.9 |
| Sample 2 | L | 101.2 | 120.3 | 105.7 |
| | R | 100.4 | 126.9 | 103.2 |
| Average | | 100.3 | 123.6 | 105.7 |

| | | | | |
|---|---|---|---|---|
| Unit (°) | | | | |

**[Table 3]**

| | | Comp. Ex. | Examples | |
|---|---|---|---|---|
| Periodic structure pattern | | - | Concentric circle | Radial |
| Time (msec) | | 1000 | 2000 | 2100 |
| Sample 1 | L | 83.1 | 12.2 | 9.0 |
| | R | 85.5 | 4.6 | 11.2 |
| Sample 2 | L | 76.4 | 14.4 | 14.2 |
| | R | 77.1 | 16.3 | 11.7 |
| Average | | 80.5 | 11.9 | 11.5 |

| | | | | |
|---|---|---|---|---|
| Unit (°) | | | | |

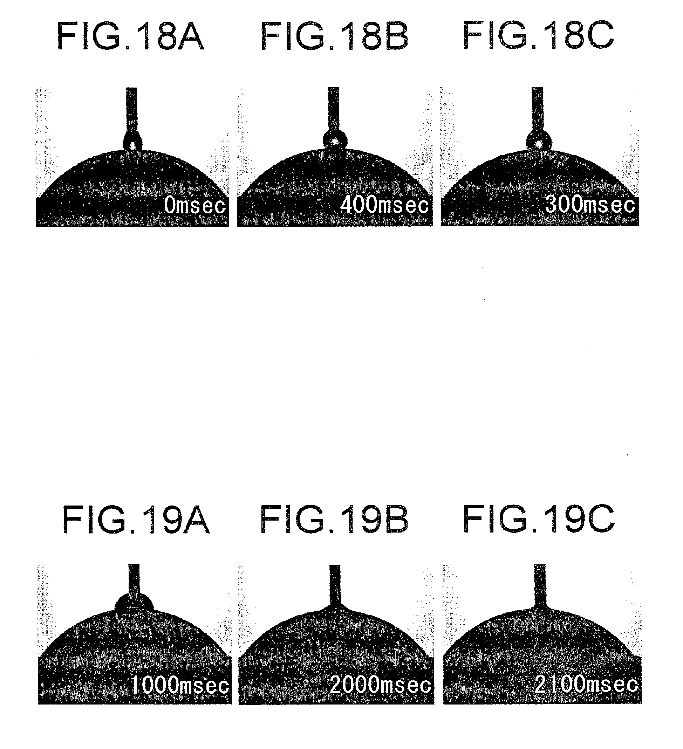

Measurements of advancing contact angle for the samples are given in Table 2, and measurements of receding contact angle for the samples are given in Table 3. Photos taken of actual conditions of droplets are shown in FIGS. 18A-C and FIGS. 19A-C. In FIGS. 18A-C and 19A-C, A is a Comparative Example lacking a periodic structure; B is an Example having a concentric circular periodic structure; and C is an Example having a radial periodic structure.

From the results presented in Tables 2 and 3 and in FIGS. 18A-C and 19A-C, it will be appreciated that, particularly during receding of the droplet, with each of the Examples having each type of periodic structure the contact angle observed was very much smaller than that observed with the Comparative Example. That is, it was found that by producing a periodic structure on the lens molding male mold, water will tend to remain on the surface of the lens molding male mold.

Next, in place of surface tests using the lens molding male molds discussed above, surface tests were carried out using the lens plates corresponding to contact lenses. First, a plate die was prepared from the same material as the female die (first die) used to make the lens molding male molds employed in the tests discussed above, and was subjected to laser machining under conditions comparable to those above, to produce a minute periodic structure of concentric circular pattern. Next, mold-forming was carried out using the plate die, to produce a plate molding mold made of polypropylene.

Next, using the plate molding mold to which the aforementioned minute periodic structure had been transferred, a lens plate of oxygen permeable (RGP) material was obtained.

An Example lens plate having the minute periodic structure of concentric circular pattern described above, and a Comparative Example lens plate lacking a periodic structure, were subjected to measurement of advancing contact angle and receding contact angle using a contact angle meter analogously to the preceding tests.

**[Table 4]**

| | | Comparative Examples | | Examples | |
|---|---|---|---|---|---|
| Periodic structure pattern | | - | | Concentric circle | |
| | | Advancing | Receding | Advancing | Receding |
| Time (msec) | | 200 | 2000 | 200 | 2600 |
| Sample 1 | L | 72.6 | 42.2 | 81.4 | 20.5 |
| | R | 77 | 43.6 | 82.2 | 11.3 |
| Sample 2 | L | 71.9 | 43.2 | 74.5 | 28.9 |
| | R | 71 | 39.8 | 75.8 | 27.7 |
| Sample 3 | L | 75.4 | 37.1 | 83.1 | 38.7 |
| | R | 74.2 | 38.5 | 80.7 | 38.8 |
| Average | | 73.7 | 40.7 | 79.6 | 27.7 |

| | | | | | |
|---|---|---|---|---|---|
| Unit (°) | | | | | |

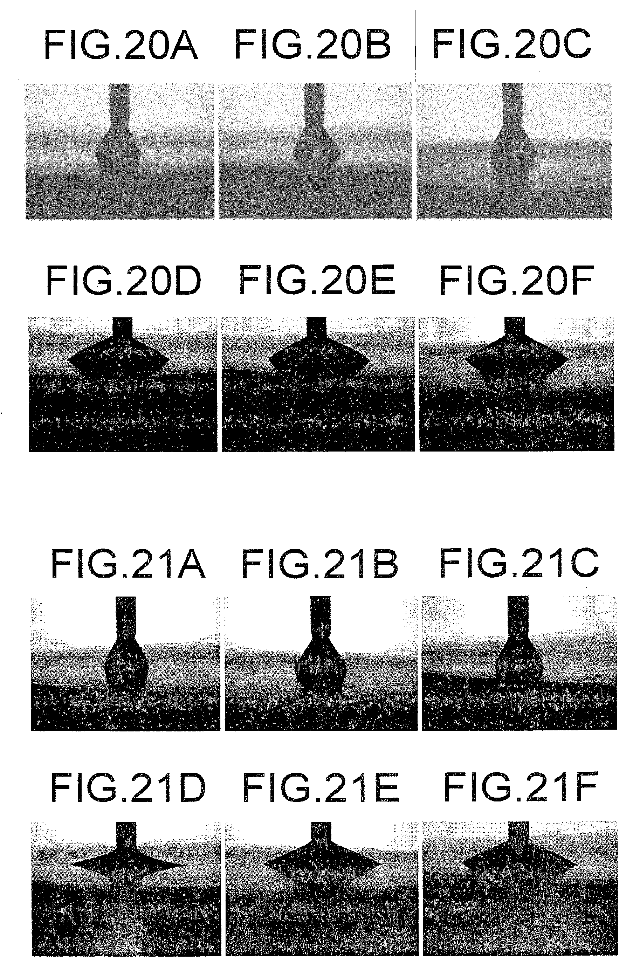

Measurements of advancing contact angle and receding contact angle respectively for the Example and the Comparative Example are given in Table 4. Conditions of droplets during advance and during receding in the Comparative Example are shown in FIGS. 20A-F; in FIGS. 20A-C show conditions during advance in the Comparative Example, and FIGS. 20D-F show conditions during receding in the Comparative Example. Conditions of droplets during advance and during receding in the Example are shown in FIGS. 21A-F; in FIGS. 21 A-C show conditions during advance in the Example, and FIGS. 21D-F show conditions during receding in the Example.

From the results presented in Table 4 and in FIGS. 20A-F and 21A-F, it will be appreciated that, in the lens plate test as in the tests described previously, particularly during receding of the droplet, with the Example having a periodic structure the contact angle observed was smaller than that observed with the Comparative Example lacking a periodic structure. That is, it was found that by producing a periodic structure on the lens plate, water will tend to remain on the surface of the lens plate.

Additionally, from the results of the two series of tests using lens molding male molds and lens plates described above, average values of the measurements were calculated, and these were used to calculate respective differentials between advancing contact angle and receding contact angle, and values for hysteresis, giving the following.

**[Table 5]**

| | Comparative Ex. | Examples | |
|---|---|---|---|
| Periodic structure pattern | - | Concentric circle | Radial |
| Lens molding male mold | 22.2 | 111.7 | 94.2 |
| Lens plate | 33 | 51.9 | - |

| | | | |
|---|---|---|---|
| Unit (°) | | | |

Table 5 gives respective values of hysteresis of the Comparative Examples and the Examples in the tests. In both tests using lens molding male molds and those using lens plates, hysteresis was found to be greater in the Examples having periodic structures than in the Comparative Examples. That is, by producing a periodic structure, the condition of the surface of the lens molding male mold or the lens plate will be such that water cannot be transported easily, and as a result they have enhanced water retentivity. Also, it will be appreciated from Table 5 that hysteresis is particularly great in the lens molding male molds, demonstrating very high water retentivity.

The description now turns to test results obtained through differential interference microscope observation of the condition of transport of physiological saline over the lens surface of contact lenses having periodic structures.

First, for this test as in the preceding tests, a die made of STAVAX (TM) was prepared, and a concentric circular periodic structure was produced on this by laser machining under conditions comparable to those in the preceding test. This die was used to make a resin mold of polypropylene, and this resin mold was then used to obtain a contact lens of soft contact lens material containing silicone.

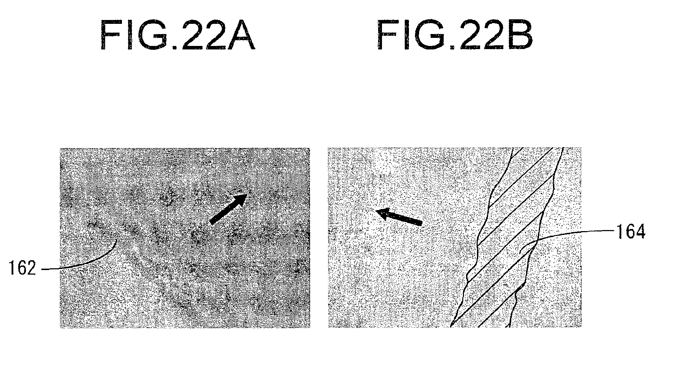

Using the Example contact lens having a periodic structure obtained in this way, and a Comparative Example contact lens lacking a periodic structure, the respective lenses were brought into contact with physiological saline, then examined under a differential interference microscope to observe conditions of the physiological saline receding over time through surface tension and the like. FIG 22A is a micrograph of the Comparative Example lacking a periodic structure, and FIG 22B is a micrograph of the Example having a periodic structure; in each image, the direction of receding of the physiological saline in the image is indicated by an arrow.

First, in the Comparative Example shown in FIG. 22A, the edge of the receding physiological saline is clearly observable as a boundary line 162. Here, an interference pattern of some width is observed in the physiological saline in proximity to the boundary line 162, showing that the physiological saline in this section has spread out to relatively shallow depth. On the other hand, in the Example depicted in FIG. 22B, while difficult to discern in the photograph, when observed with the naked eye, a faintly darker band-shaped section 164 is observed in the boundary section of the physiological saline (indicated by diagonal lines in FIG 22B). This is thought to represent a zone in which the physiological saline has spread out very thinly to the point that no interference pattern is observed at all. In FIG 22B, a relatively narrow interference pattern is observed adjacent to the band-shaped section 164, showing that past the band-shaped section 164 the physiological saline is spread to relatively greater depth. In this test, on the contact lens of the Comparative Example the receding speed of the physiological saline was relatively rapid, whereas on the contact lens of the Example the receding speed of the physiological saline was very gradual. These results demonstrate that the contact lens of the Example having a periodic structure formed thereon has a very small receding contact angle and enhanced water retentivity on the lens surface.

Next, using silicone-containing soft contact lenses having a concentric circular periodic structure produced by the same procedure as in the preceding test, the lenses were subjected to a test of actual wear by test subjects. Measurements of time elapsed from the time that the wearer opens the eye until the lacrimal fluid film on the lens surface begins to disappear are given below.

**[Table 6]**

| Elapsed lens wear time | | 0 min | 15 min | 30 min |
|---|---|---|---|---|
| Comparative Example | Subject 1 | 1.89 | 1.83 | 2.59 |
| | Subject 2 | 2.9 | 2.38 | 4.62 |
| | Subject 3 | 5.2 | 3.34 | 2.52 |
| Example | Subject 1 | 4.99 | 4.44 | 5.99 |
| | Subject 2 | 4.63 | 3.75 | 4.27 |
| | Subject 3 | 8.49 | 5.53 | 5.07 |

| | | | | |
|---|---|---|---|---|
| Unit (sec) | | | | |

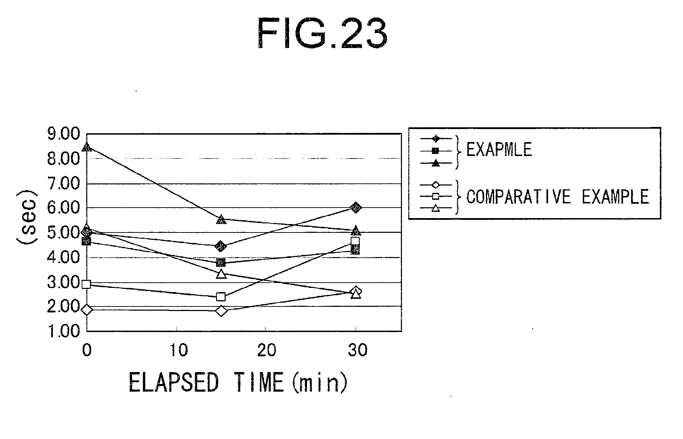

Table 6 gives measurements respectively taken in the case of a Comparative Example involving wear of ordinary contact lenses lacking a periodic structure, and in the case of an Example involving wear of contact lenses having a concentric circular periodic structure, taken after 0 minutes, 15 minutes, and 30 minutes of lens wear. The test results of Table 6 are shown in graph format in FIG 23 as well. From Table 6 and FIG 23 it will be appreciated that contact lenses having a periodic structure are observed to have noticeably longer time intervals before the lacrimal fluid film on the lens surface began to disappear, and to retain lacrimal fluid on the lens surface for longer periods than in the Comparative Example. These results were observed not just at the outset of wear, but even after wear for 30 minutes. That is, it was found that even after the lens was worn for a prolonged period and drying out of the lens had progressed, there was a high degree of retention of the lacrimal fluid with which the lens surface was replenished by blinking, which proved highly effective in reducing dry feel.

Next, a contact angle measurement test was carried out on commercially available nanoimprint molds (typically used for circuit boards) on which a pattern comparable to the periodic structure in the present invention had been formed; the results are given below.

First, for this test, nanoimprint molds made of silicone were prepared as samples in place of the resin mold molding dies used in the preceding embodiment. The pattern produced on the nanoimprint molds was a line & space pattern, with pattern depth of 5 µm and pitch of 1 µm, 5 µm, 10 µm, and 50 µm respectively.

Static contact angle was measured in each section of these nanoimprint molds, i.e. the periodic structure section and the flat section. As with the contact angle measurement tests carried out on the lens molding male mold and the lens plate described above, a DropMaster 500 made by Kyowa Interface Science Co. Ltd. was used to measure contact angle.

**[Table 7]**

| Pitch (µm) | | 1 | 5 | 10 | 50 | Remarks |
|---|---|---|---|---|---|---|
| Flat section | | 68 | | | | |
| Periodic structure section | Sample 1 | 35 | 35 | 29 | 65 | Observed orthogonally to long axis direction |
| | | 68 | 75 | 77 | 116 | Observed orthogonally to short axis direction |
| | Sample 2 | 30 | 37 | 32 | 75 | Observed orthogonally to long axis direction |
| | | 80 | 78 | 84 | 125 | Observed orthogonally to short axis direction |

| | | | | | | |
|---|---|---|---|---|---|---|
| Unit (°) | | | | | | |

Table 7 gives measurements of static contact angle taken for each sample. With the exclusion of the sample having 50 µm pitch, when observed in a direction orthogonal to the long axis direction of the formed lines the periodic structure section was found to have a smaller contact angle than that of the flat section. At each pitch from 1 to 50 µm, a tendency for water to spread out along the grooves (in the long axis direction) was observed. Also, in the course of drying out, the depth of water droplets was observed to become gradually smaller while retaining their width in the direction orthogonal to the long axis direction (the short axis direction). Also, at the interface of the droplet and the sample in the periodic structure section, a thin film was observed similar to that seen in the observation tests of the preceding Examples using the differential interference microscope discussed previously. In particular, in samples with pitch ranging from 1 to 10 µm, wettability and water retentivity functions were found to be enhanced through formation of the periodic structure.

The above test results demonstrate that the effect of enhanced water retentivity afforded by providing the periodic structure according to the present invention is not limited to the contact lenses and resin molds therefor which were discussed previously, but is observed analogously in samples of different material, i.e. nanoimprint molds made of silicone. It is accordingly clear that the effect of the present invention is unrelated to the makeup of a material, but is effectively produced by way of an effect of physical morphology. It is demonstrated thereby that the invention will have potential application in various types of materials for use in current or future contact lenses, and that by so doing the present invention will effectively afford the intended improvements in water retentivity and wear feel.

## Claims

1. A method of producing a contact lens (10) furnished with a lens anterior surface (12) of a convex profile and a lens posterior surface (14) of a concave profile, **characterized in that**:
a minute periodic structure, which is created by ablation caused by exposure to a laser light with a pulse width between 1 x 10⁻¹⁶ second and 1 x 10⁻⁷ second, is formed directly or through transfer on at least one of the lens anterior surface (12) and the lens posterior surface (14) of the contact lens (10), whereby a periodic structure of minute projections and depressions, extending parallel to one another with a depth of between 0.01 µm and 30 µm and with a pitch of between 0.01 µm and 2 µm, and with an aspect ratio, expressed as depth/width of between 0.1 and 5, is formed on the contact lens (10), wherein
the minute projections and depressions are provided at least 8 millimetres diameter or further from the lens geometric centre.

2. The method of producing a contact lens (10) according to claim 1, wherein at least one of the lens anterior surface (12) and the lens posterior surface (14) is exposed to the ablation of the laser light to produce the minute periodic structure directly on the contact lens (10), so that the periodic structure of minute projections and depressions is constituted by the minute periodic structure.

3. The method of producing a contact lens (10) according to claim 1, wherein at least one of the lens anterior surface (12) and the lens posterior surface (14) is formed using a resin mold; the minute periodic structure is formed on a lens molding face of the resin mold through exposure to the ablation of the laser light; and the minute periodic structure that has been formed on the resin mold is transferred to at least one of the lens anterior surface (12) and the lens posterior surface (14) to form the periodic structure of minute projections and depressions on the contact lens (10).

4. The method of producing a contact lens (10) according to claim 1, wherein at least one of the lens anterior surface (12) and the lens posterior surface (14) is formed using a resin mold that has been molded with a die; the minute periodic structure is formed on a resin mold molding face of the die through exposure to the ablation of the laser light; the minute periodic structure that was formed on the die is transferred to the lens molding face of the resin mold; and the minute periodic structure that was transferred to the resin mold is re-transferred to at least one of the lens anterior surface (12) and the lens posterior surface (14) to form the periodic structure of minute projections and depressions on the contact lens (10).

5. The method of producing a contact lens (10) according to claim 1, wherein at least one of the lens anterior surface (12) and the lens posterior surface (14) is formed using a die; the minute periodic structure is formed on the lens molding face of the die through exposure to the ablation of the laser light; and the minute periodic structure that was formed on the die is transferred directly to at least one of the lens anterior surface (12) and the lens posterior surface (14) to form the periodic structure of minute projections and depressions on the contact lens (10).

## Patentansprüche

1. Verfahren zum Herstellen einer Kontaktlinse (10), die mit einer Linsenvorderseitenfläche (12) mit einem konvexen Profil und einer Linsenrückseitenfläche (14) mit einem konkaven Profil ausgerüstet ist, **dadurch gekennzeichnet, dass**:
eine sehr kleine periodische Struktur, die durch Ablation erzeugt wird, die durch Beleuchtung mit Laserlicht mit einer Impulsbreite im Bereich von 1 × 10⁻¹⁶ Sekunden bis 1 × 10⁻⁷ Sekunden verursacht wird, direkt oder durch Übertragung auf die Linsenvorderseitenfläche (12) und/oder die Linsenrückseitenfläche (14) der Kontaktlinse (10) gebildet wird, wobei die periodische Struktur aus sehr kleinen Vorsprünge und Vertiefungen, die sich parallel zueinander mit einer Tiefe im Bereich von 0,01 µm bis 20 µm und mit einem Zwischenraum im Bereich von 0,01 µm bis 2 µm erstrecken und mit einem Seitenverhältnis, ausgedrückt als Tiefe/Breite, im Bereich von 0,1 bis 5, auf der Kontaktlinse (10) gebildet wird, wobei
die sehr kleinen Vorsprünge und Vertiefungen mit wenigstens 8 Millimeter Durchmesser oder weiter von dem geometrischen Mittelpunkt der Linse vorgesehen sind.

2. Verfahren zum Herstellen einer Kontaktlinse (10) nach Anspruch 1, wobei die Linsenvorderseitenfläche (12) und/oder die Linsenrückseitenfläche (14) der Ablation des Laserlichts ausgesetzt wird, um die sehr kleine periodische Struktur direkt auf der Kontaktlinse (10) zu erzeugen, so dass die periodische Struktur aus sehr kleinen Vorsprüngen und Vertiefungen durch die sehr kleine periodische Struktur erzeugt wird.

3. Verfahren zum Herstellen einer Kontaktlinse (10) nach Anspruch 1, wobei die Linsenvorderseitenfläche (12) und/oder die Linsenrückseitenfläche (14) unter Verwendung einer Harzform gebildet wird; die sehr kleine periodische Struktur auf einer Linsenformfläche der Harzform durch Aussetzen der Ablation des Laserlichts gebildet wird; und die sehr kleine periodische Struktur, die auf der Harzform gebildet worden ist, auf die Linsenvorderseitenfläche (12) und/oder die Linsenrückseitenfläche (14) übertragen wird, um die periodische Struktur aus sehr kleinen Vorsprüngen und Vertiefungen auf der Kontaktlinse (10) zu bilden.

4. Verfahren zum Herstellen einer Kontaktlinse (10) nach Anspruch 1, wobei die Linsenvorderseitenfläche (12) und/oder die Linsenrückseitenfläche (14) unter Verwendung einer Harzform, die mit einer Gussform gegossen worden ist, gebildet wird; die sehr kleine periodische Struktur auf einer Harzformformungsfläche durch Aussetzen der Ablation des Laserlichts gebildet wird; die sehr kleine periodische Struktur, die auf der Gussform gebildet worden ist, auf die Linsenformungsfläche der Harzform übertragen wird; und die sehr kleine periodische Struktur, die auf die Harzform übertragen worden ist, erneut auf die Linsenvorderseitenfläche (12) und/oder die Linsenrückseitenfläche (14) übertragen wird, um die periodische Struktur aus sehr kleinen Vorsprüngen und Vertiefungen auf der Kontaktlinse (10) zu bilden.

5. Verfahren zum Herstellen einer Kontaktlinse (10) nach Anspruch 1, wobei die Linsenvorderseitenfläche (12) und/oder die Linsenrückseitenfläche (14) unter Verwendung einer Gussform gebildet wird; die sehr kleine periodische Struktur auf einer Linsenformungsfläche der Gussform durch Aussetzen der Ablation des Laserlichts gebildet wird; und die sehr kleine periodische Struktur, die auf der Gussform gebildet worden ist, direkt auf die Linsenvorderseitenfläche (12) und/oder die Linsenrückseitenfläche (14) übertragen wird, um die periodische Struktur aus sehr kleinen Vorsprüngen und Vertiefungen auf der Kontaktlinse (10) zu bilden.

## Revendications

1. Procédé de fabrication d'une lentille de contact (10) présentant une face antérieure (12) de lentille, de profil convexe, et une face postérieure (14) de lentille, de profil concave, **caractérisé en ce que**
une structure périodique fine, produite par ablation provoquée par exposition à la lumière d'un laser à impulsions de largeur située entre 1.10⁻¹⁶ seconde et 1.10⁻⁷ seconde, est formée, directement ou par transfert, sur au moins l'une des faces antérieure (12) et postérieure (14) de la lentille de contact (10), grâce à quoi est formée, sur la lentille de contact (10), une structure périodique constituée de fins saillants et creux qui s'étendent parallèlement les uns aux autres, avec une profondeur de 0,01 à 30 µm, un pas de 0,01 µm à 2 µm et un rapport d'aspect profondeur/largeur de 0,1 à 5,
étant entendu que les fins saillants et creux sont pratiqués à 8 mm au moins de distance radiale, ou plus loin, du centre géométrique de la lentille.

2. Procédé de fabrication d'une lentille de contact (10), conforme à la revendication 1, dans lequel
au moins l'une des faces antérieure (12) et postérieure (14) de la lentille est exposée à la lumière d'un laser qui, par ablation, produit une structure périodique fine directement sur la lentille de contact (10), de sorte que la structure périodique de fins saillants et creux est constituée par cette structure périodique fine.

3. Procédé de fabrication d'une lentille de contact (10), conforme à la revendication 1, dans lequel
au moins l'une des faces antérieure (12) et postérieure (14) de la lentille est formée au moyen d'un moule en résine ;
une structure périodique fine est formée sur une face de moulage de lentille du moule en résine, par ablation par exposition à la lumière d'un laser ;
et cette structure périodique fine qui a été formée sur le moule en résine est transférée sur au moins l'une des faces antérieure (12) et postérieure (14) de la lentille pour former la structure périodique de fins saillants et creux sur la lentille de contact (10).

4. Procédé de fabrication d'une lentille de contact (10), conforme à la revendication 1, dans lequel
au moins l'une des faces antérieure (12) et postérieure (14) de la lentille est formée au moyen d'un moule en résine qui a été moulé au moyen d'une matrice ;
une structure périodique fine est formée sur une face de moulage de moule en résine de la matrice, par ablation par exposition à la lumière d'un laser ;
cette structure périodique fine qui a été formée sur la matrice est transférée sur la face de moulage de lentille du moule en résine ;
et cette structure périodique fine qui a été transférée sur le moule en résine est retransférée sur au moins l'une des faces antérieure (12) et postérieure (14) de la lentille pour former la structure périodique de fins saillants et creux sur la lentille de contact (10).

5. Procédé de fabrication d'une lentille de contact (10), conforme à la revendication 1, dans lequel
au moins l'une des faces antérieure (12) et postérieure (14) de la lentille est formée au moyen d'une matrice ;
une structure périodique fine est formée sur la face de moulage de lentille de la matrice, par ablation par exposition à la lumière d'un laser ;
et cette structure périodique fine qui a été formée sur la matrice est transférée directement sur au moins l'une des faces antérieure (12) et postérieure (14) de la lentille pour former la structure périodique de fins saillants et creux sur la lentille de contact (10).
